# EUROPÄISCHE PATENTSCHRIFT

(11) **EP 4 090 205 B1**
(45) Veröffentlichungstag und Bekanntmachung des Hinweises auf die Patenterteilung: **10.01.2024**
(21) Anmeldenummer: 21703365.3
(22) Anmeldetag: 18.01.2021
(51) Int. Cl.: A47J 31/30, A47J 45/06

(54) **VORRICHTUNG NACH DEM STEIGROHRPRINZIP FÜR DIE ZUBEREITUNG EINES HEISSGETRÄNKS, INSBESONDERE VON KAFFEE UND/ODER TEE**
PERCOLATOR-TYPE DEVICE FOR PREPARING HOT DRINKS, ESPECIALLY COFFEE AND/OR TEA
DISPOSITIF DE TYPE PERCOLATEUR POUR PRÉPARATION DE BOISSONS CHAUDES, NOTAMMENT DU CAFÉ ET/OU DU THÉ

(30) Priorität: 17.01.2020 DE 202020100233 U; 17.01.2020 DE 202020100236 U; 17.01.2020 DE 202020100234 U; 17.01.2020 DE 202020100237 U
(43) Veröffentlichungstag der Anmeldung: 23.11.2022
(73) Patentinhaber: Jäkel, Lucas-Lionel, 14195 Berlin (DE)
(72) Erfinder: Jäkel, Lucas-Lionel, 14195 Berlin (DE)
(74) Vertreter: Maikowski & Ninnemann Patentanwälte Partnerschaft mbB
(86) Internationale Anmeldenummer: PCT/EP2021/050939
(87) Internationale Veröffentlichungsnummer: WO 2021/144469

(56) Entgegenhaltungen:
- EP-A1- 3 130 262
- DE-C- 870 892

## Beschreibung

Die vorliegende Erfindung bezieht sich auf Vorrichtungen nach dem Steigrohrprinzip für die Zubereitung eines Heißgetränks, insbesondere auf eine entsprechende Vorrichtung zur Zubereitung von Kaffee- oder Teespezialitäten. Dabei handelt es sich um eine Vorrichtung, die als Steigrohrmaschine mit und ohne elektrischer und elektromechanischer Bauteile, sowie elektrischen Heizelementen, ausgeführt sein kann.

### Stand der Technik

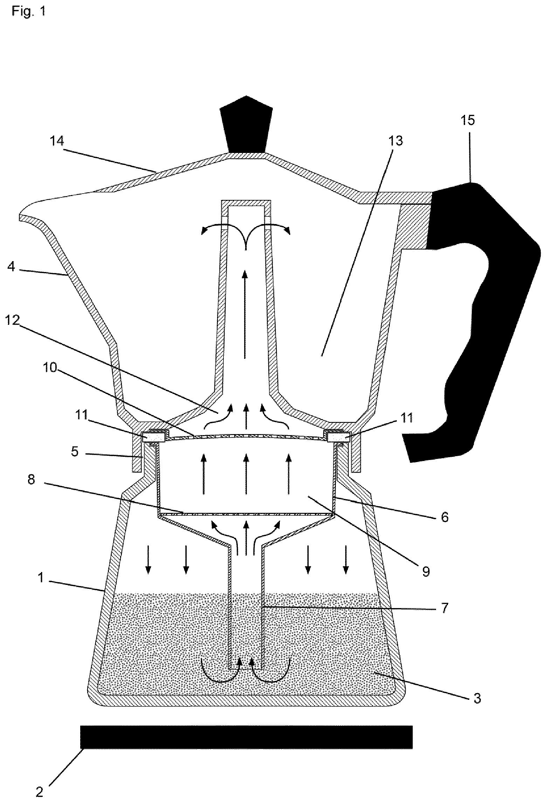

Aus dem Stand der Technik sind bereits Vorrichtungen nach dem Steigrohrprinzip für die Zubereitung eines Heißgetränks bekannt, in Form einer Espressokanne (Folgend exemplarisch an Fig. 1 beschrieben). Eine solche Espressokanne umfasst einen unteren Gehäuseabschnitt 1, der, aus einem hitzebeständigen Metall gebildet, auf eine externe Heizquelle 2 (z. B. einen Elektroherd oder Gasflamme) aufgesetzt werden kann. Im Inneren des unteren Gehäuseabschnitts befindet sich eine Flüssigkeit 3 (z. B. Wasser), die dadurch in den unteren Gehäuseabschnitt eingefüllt werden kann, dass der untere Gehäuseabschnitt vom oberen Gehäuseabschnitt 4 durch Auseinanderschrauben der beiden Gehäuseabschnitte getrennt wird.

Der obere Gehäuseabschnitt ist meist mit Hilfe eines Gewindes 5 auf den unteren Gehäuseabschnitt 1 so montierbar, dass der Innenraum des unteren Gehäuseabschnittes, bis auf den Weg durch den Steigrohrabschnitt, druckdicht gegenüber der Umgebung abgeschlossen werden kann.

Eine solche Espressokanne weist weiter einen zum Einsetzen in den unteren Gehäuseabschnitt vorgesehenen Einsatz 6 auf, der aus einem unteren Steigrohr 7, einem darüber ausgebildeten Einlassfilter 8 und einem darüber ausgebildeten Durchflussvolumen 9 besteht. In das Durchflussvolumen kann Kaffeepulver eingefüllt werden. Nach Einsetzen des Einsatzes und Verschrauben der beiden Gehäuseabschnitte schließen sich oberhalb des Einsatzes bzw. des Durchflussvolumens ein zweiter Filter 10 (Auslassfilter), sowie ein Dichtungsring 11 an. Dieser weitere Rohrabschnitt bildet zusammen mit dem Auslassfilter einen Auslassbereich 12, der in das Innere eines im oberen Gehäuseabschnitt ausgebildeten Sammelbehälters 13 führt.

Wird die Flüssigkeit durch die Hitzequelle erhitzt, so verdampft diese und bildet mit der Zeit im Inneren des unteren Gehäuseabschnitts ein Überdruck der dazu führt, dass erhitzte Flüssigkeit durch das untere Steigrohr, den unteren Einlassfilter, das mit Kaffee (oder Tee) gefüllte Durchflussvolumen, den oberen Auslassfilter und den sich diesem Filter anschließenden oberen Gehäuseabschnitt gedrückt wird (Durch Pfeile in Fig.1 dargestellt).Dieser obere Gehäuseabschnitt ist meist durch einen Deckel 14 abgedeckt und verfügt über einen Ausguss um Flüssigkeiten im Sammelbehälter auszugießen.

Espressokannen nach dem zuvor beschriebenen Prinzip (die zuweilen auch als Moka Kannen bezeichnet werden) sind seit vielen Jahren bekannt.

Die Espressokannen nach dem Stand der Technik werden somit mithilfe einer Hitzequelle erhitzt, sodass, durch den im Inneren des Flüssigkeitsbehälters bzw. unteren Gehäuseabschnitts entstehenden Wasserdampfdruck, Wasser durch den Steigrohrabschnitt in den Sammelbehälter des oberen Gehäuseabschnitts gedrückt wird. (wobei die Kaffeepulverkammer bzw. das Durchflussvolumen durchströmt wird). Es entsteht Kaffee als Heißgetränk.

Aufgrund des Materials der Handelsüblichen Espressokannen (Aluminium, Edelstahl) und deren Bauweise, erhitzt sich nicht nur die Flüssigkeit im Inneren des Kochers, sondern auch beide Gehäuseabschnitte, der Einsatz, der Dichtungsring , der Auslassfilter sowie der Inhalt des Durchflussvolumens. Lediglich der thermisch isolierte Griff am oberen Gehäuseabschnitt erhitzt sich kaum. Es ergibt sich eine akute Verbrennungsgefahr.

Diese Verbrennungsgefahr erschwert das Öffnen, Schließen, Entleeren, sowie erneutes Befüllen der Espressokanne, kurz nach einer Benutzung erheblich, da hierfür die heißen Gehäuseabschnitte per Hand auseinander geschraubt und der ebenso heiße Einsatz entnommen werden muss.

Im Alltag werden hierfür Beispielsweise Hilfsmittel wie Topflappen zum Anfassen oder kaltes Wasser zum Abkühlen der Espressokanne verwendet, doch sind diese nicht optimal. Die verwendung von Wasser zum Abkühlen ist eine unnötige Verschwendung von Wasser und beasprucht viel Zeit. Mit einem Topflappen kann man beispielsweise schnell abrutschen oder beim Entnehmen des heißen Einsatzes verschmutzt der Lappen und saugt heiße Flüssigkeitsreste aus dem Kocher auf.

Besonders bei der Entnahme des Einsatzes kommt es verstärkt zu Komplikationen, da dieser durch seine Form und Einlassung in das Gehäuseunterteil nur schwer zu entnehmen ist und den noch heißen und feuchten Inhalt des Durchflussvolumens enthält.

Nach dem Stand der Technik gibt es aktuell Espressokannen-Modelle, bei denen sich der Einsatz, nach dem Abnehmen des oberen Gehäuseabschnittes, aus dem unteren Gehäuseabschnitt mittels einer Feder, ein Stück weit heraus drückt. Dies erleichtert die Entnahme des Einsatzes, doch benötigt man hierfür im heißen Zustand noch immer Hilfsmittel.

Zum Öffnen und Schließen der Espressokanne wird zudem ein hoher Kraftaufwand benötigt, da das Gewinde fest verschraubt werden muss, um eine druckdichte Verbindung herzustellen. Diese Verbindung ist durch thermische Verformung nach einer Erwärmung der Espressokanne oft noch schwerer wieder zu lösen. Für Menschen, die diese Kraft nicht ohne weiteres aufbringen können (häufig ältere Menschen) , ist die Benutzung von Espressokannen daher nur schwer oder gar nicht mehr möglich.

Die Menge des entstehenden Kaffees hängt immer von der Menge an Kaffeepulver im Durchflussvolumen und der Menge an Wasser im unteren Gehäuseabschnitt ab. Diese hängen wiederum von der Größe der Espressokanne ab, da diese nach Stand der Technik auf bestimmte Mengen festgelegt und nur minimal variierbar sind.

Möchte ein Konsument beispielsweise viel Kaffee kochen, so braucht er eine große Kaffeekanne mit einem großen Einsatz. Doch kann er mit dieser nicht weniger Kaffee kochen, als die Größe vorgibt. Füllt man Beispielsweise weniger Wasser in das Gehäuseunterteil als vorgesehen, entsteht zwar weniger Kaffee, doch wird dieser viel intensiver als einer nach den vorgesehenen Mengen. Wird das Durchflussvolumen nicht vollständig mit Kaffeepulver ausgefüllt, so liegt das Kaffeepulver zu lose im Einsatz und bietet nicht genug Widerstand für das aufsteigende Wasser. Es kann sich nicht genügend Druck aufbauen.

Nur wenige Modelle weisen die Möglichkeit auf, die Menge an Kaffeepulver, mittels eines losen Einsatzfilters, nach Bedarf zu halbieren.

Da dieser Einsatzfilter lose im Einsatz liegt, fällt dieser oft beim Entleeren des Einsatzes zusammen mit dem benutztem Kaffeepulver in den Abfall. Gerne wird dieser auch verlegt, sodass ein neuer Einsatzfilter gekauft werden muss. Somit kommt es zu unnötiger Materialverschwendung und zusätzlichen Kosten.

Zusätzlich verhindern fest verbaute Einlassfilter im Einsatz eine gründliche Reinigung, da sich unterhalb des Einlassfilters Kaffeeablagerungen festsetzen können, welche nicht direkt zu erreichen sind.

Um den entstehenden Kaffee trinken zu können, wird dieser aus dem oberen Gehäuseabschnitt in eine Tasse, Becher oder ähnliches Behältnis gegeben. Um den Kaffee dabei nicht zu stark abzukühlen, werden diese Behältnisse vorher mittels extra aufgeheiztem Wasser oder Wasserdampf vorgewärmt.

Dies führt zu einer unnötigen Verschwendung von Wasser und Energie oder einer erneuten Verbrennungsgefahr, sollte man versuchen per Hand den entstehenden heißen Wasserdampf einer Espressokanne zum Vorwärmen eines Behältnisses zu nutzen.

Nach dem Stand der Technik gibt es Espressokannen auf denen Behältnisse platziert werden können, sodass diese die Wärme der Espressokanne aufnehmen, dabei jedoch, je nach Material, nicht sehr effizient die Wärme aufnehmen können.

Des Weiteren gibt es Espressokannen mit einer Vorrichtung zum Aufschäumen von Milch, welche den entstehenden Wasserdampf nutzen. Hierzu wird erst wieder das Gehäuseoberteil abgeschraubt, durch die Aufschäumvorrichtung ersetzt und der Kocher erneut mit Wasser befüllt, sowie erhitzt werden.

Die Druckschrift EP 3 130 262 A1 offenbart eine Vorrichtung gemäss Oberbegriff des Anspruchs 1.

Aufgabe der vorliegenden Erfindung ist es daher ausgehend vom Stand der Technik eine Vorrichtung nach dem Steigrohrprinzip so weiterzubilden, dass es dem Verbraucher ermöglicht wird, eine beliebige Menge an Kaffee oder ähnlichem, bei verminderter Verletzungsgefahr und weniger Komplikationen zuzubereiten und ohne dabei auf Hilfsmittel oder lange Wartezeiten angewiesen zu sein.

Entsprechend wird eine Vorrichtung nach dem Steigrohrprinzip für die Zubereitung eines Heißgetränks insbesondere von Kaffee und/oder Tee bereitgestellt, welche umfasst:
- einen unteren Gehäuseabschnitt, der so ausgebildet ist, dass in diesen erhitzte Flüssigkeit zuleitbar und/oder in ihm befindliche Flüssigkeit mittels einer externen Heizquelle erhitzbar ist;
- einen oberen Gehäuseabschnitt zum Abführen von durch den Einsatz durchgeströmter Flüssigkeit aus dem unteren Gehäuseabschnitt;
- einen Einsatz mit einem Steigrohr zum Leiten der erhitzten Flüssigkeit aus dem unteren Gehäuseabschnitt in den oberen Gehäuseabschnitt und zur Aufnahme des von erhitzten Flüssigkeit zu durchströmenden Kaffes oder Tee,
- wobei die Vorrichtung so ausgebildet ist, dass der untere Gehäuseabschnitt mit dem oberen Gehäuseabschnitt im kaltem als auch heißem Zustand druckdicht gegenüber der Umgebung abgeschlossen werden kann, sodass durch das Erhitzen von Flüssigkeit ein Überdruck im unteren Gehäuseabschnitt herstellbar ist, durch den Flüssigkeit aus dem unteren Gehäuseabschnitt zunächst durch den Einsatz, dann durch das Durchflussvolumen und schließlich durch einen Auslassbereich drückbar ist.
wobei am Einsatz außerhalb der Gehäuseabschnitte eine thermisch isolierte Griffmöglichkeit vorgesehen ist, mit welcher der Einsatz aus dem unteren Gehäuseabschnitt entnommen werden kann.

Die thermisch isolierte Griffmöglichkeit wird am Einsatz durch eine oder mehrere Führungen durch Gewindeverschlüsse nach außerhalb der Gehäuseabschnitte geführt.

In einer weiteren Ausführungsform der vorliegenden Vorrichtung kann die thermisch isolierte Griffmöglichkeit am Einsatz permanent mit dem Einsatz verbunden sein oder auch nicht.

In einer weiteren Ausführungsform der vorliegenden Vorrichtung ist eine Dichtungsmasse so zwischen dem unteren Gehäuseabschnitt und dem Einsatz angeordnet, dass ein Überdruck im unteren Gehäuseabschnitt herstellbar ist, ohne dass dabei Flüssigkeit oder Flüssigkeitsdampf zwischen dem unteren Gehäuseabschnitt und dem Einsatz entweichen kann.

In einer anderen Ausführungsform weist das Steigrohr des Einsatzes ein Gewinde und einen mit dem Gewinde verschraubbaren Einlassfilter, wobei der Einlassfilter aufsteigende Flüssigkeiten nicht blockiert und frei in der Höhe des Gewindes eingestellt werden kann, bis hin zur vollständigen Entnahme des Einlassfilters aus dem Steigrohr, beziehungsweise Einsatzes.

In einer weitergehenden Ausführung der vorliegenden Vorrichtung weist der Einlassfilter eine Hohlschraube oder vergleichbares an seiner Unterseite auf, welche mit dem Gewinde des Steigrohres des Einsatzes verschraubt werden kann, wobei aufsteigende Flüssigkeiten nicht blockiert werden.

Des Weiteren verfügt der Einlassfilter über mindestens eine Griffmöglichkeit, welche ein Drehen des Einlassfilters im Einsatz ermöglicht.

Auch ist es bevorzugt, wenn der Einsatz Markierungen zur Mengenangabe besitzt.

In einer weitergehenden Ausführungsform der vorliegenden Vorrichtung weist der untere Gehäuseabschnitt eine oder mehrer thermisch isolierte Griffmöglichkeiten auf, welche permanent mit dem unteren Gehäuseabschnitt verbunden sein kann oder auch nicht.

In einer noch weiteren Ausführungsform der vorliegenden Vorrichtung kann die thermische Isolation der Griffmöglichkeiten sowohl durch nicht hitzeleitende Materialien, als auch spezielle Konstruktionsweisen wie Hohlgriffe, sowie Punktschweißen erreicht werden.

In einer Ausführungsform der vorliegenden Vorrichtung weist der obere Gehäuseabschnitt einen Deckel auf, der so konstruiert ist, dass auf diesem ein Behältnis, wie eine handelsübliche Tasse oder Becher, kopfüber platziert werden kann, sodass das Behältnis den aufsteigenden Wasserdampf auffangen kann, während entstehendes Kondenswasser zurück in das Kocheroberteil geleitet wird.

In einer weitergehenden Ausführungsform weist der Deckel ein oder mehrere Abflussschrägen/ beziehungsweise Gefälle >1° auf, beziehungsweise bildet selbst ein Gefälle (Schräge), welches zu den Rändern sowie eventuellen Öffnungen des Deckels hin abfällt.

Die Fläche des Deckels kann zudem eine/mehrere Öffnungen aufweisen, durch welche Wasserdampf aufsteigen kann.

Von Vorteil gegenüber dem Stand der Technik ist, dass mit Hilfe dieser Erfindung, eine beliebige Menge Kaffee oder Ähnliches zubereitet werden kann, ohne dabei auf Hilfsmittel angewiesen zu sein. Denn trotz heißer Bauteile nach dem ersten Kochvorgang, kann die Vorrichtungdurch die thermisch isolierten Griffmöglichkeiten sofort geöffnet und neu befüllt werden. Es können präzise Füllmengen bestimmt werden und somit auch kleinere Mengen Kaffee zubereitet werden, sodass Beispielsweise der Kauf einer kleineren Espressokanne nicht länger nötig ist. Somit kann auch Material gespart werden. Alle für den Herstellungsprozess eines Heißgetränkes relevanten Teile der Vorrichtung sind leichter zu bedienen und dies besonders auch im heißen Zustand der Vorrichtung. Die Gefahr sich beim Bedienen einer heißen Espressokanne zu verbrennen wird bedeutend gemindert und der Prozess des Säuberns sowie erneuten Befüllens wird komfortabler.

Weitere Vorteile der vorliegenden Erfindung werden durch die in den Schutzansprüchen aufgeführten Merkmale und wie nachfolgend anhand der Zeichnungen Fig. 2-20 und detaillierten Beschreibung ersichtlich.

Beschreibung der Zeichnungen:
Fig. 1 ist ein Querschnitt einer konventionellen Moka Pots/ Espressokanne gemäß dem Stand der Technik.
Fig. 2 ist ein Querschnitt einer Vorrichtung nach dem Steigrohrprinzip für die Zubereitung eines Heißgetränks, insbesondere von Kaffee und/oder Tee gemäß der bevorzugten Ausführungsform der vorliegenden Erfindung.
Fig. 3 ist eine lokal vergrößerte Ansicht, der in Fig. 2 abgebildeten Führung im Querschnitt.
Fig. 4 ist eine lokal vergrößerte Explosivdarstellung der in Fig.2 abgebildeten Vorrichtung im Querschnitt.
Fig. 5 ist eine perspektivische Darstellung der in Fig. 2 abgebildeten Vorrichtung.
Fig. 6 ist eine perspektivische Explosionsdarstellung der in Fig. 2 abgebildeten Vorrichtung.
Fig. 7 ist eine lokal vergrößerte perspektivische Ansicht der in Fig. 2 abgebildeten Vorrichtung.
Fig. 8 ist ein lokal vergrößerte Ansicht einer in Fig. 8-10 dargestellten nicht erfindungsgemässen alternativen Verschlussmethode im Querschnitt.
Fig. 9 ist eine perspektivische Explosionsdarstellung einer nicht erfindungsgemässen Vorrichtung nach dem Steigrohrprinzip mit alternativer Verschlussmethode.
Fig. 10 ist eine perspektivische Ansicht der in Fig. 9 dargestellten Vorrichtung.
Fig. 11 ist ein Querschnitt der in Fig. 2 abgebildeten Vorrichtung mit dargestellter Funktionsweise des Einsatzes, sowie Markierungen zur Mengenangabe.
Fig. 12 ist ein local vergrößerter Querschnitt des in Fig. 2 abgebildeten Einsatzes und unterem Gehäuseabschnitt.
Fig. 13 ist eine perspektivische Ansicht, des in Fig. 11 abgebildeten Einsatzes und unterem Gehäuseabschnitt.
Fig. 14 ist eine perspektivische Ansicht, des in Fig. 13 abgebildeten Einsatzes und unterem Gehäuseabschnittes im Querschnitt.
Fig. 15 ist eine perspektivische Explosionsdarstellung, des in Fig. 13 abgebildeten Einsatzes und unterem Gehäuseabschnitt.
Fig. 16 ist eine perspektivische Explosionsdarstellung, des in Fig. 15 abgebildeten Einsatzes und unterem Gehäuseabschnitt.
Fig. 17 ist eine perspektivische Darstellung einer Vorichtung nach dem Steigrohrprinzip mit alternativen thermisch isolierten Griffmöglichkeiten.
Fig. 18 ist eine perspektivische Darstellung einer weiteren Vorichtung nach dem Steigrohrprinzip mit alternativen thermisch isolierten Griffmöglichkeiten.
Fig. 19 ist eine local vergrößerte perspektivische Ansicht des in Fig. 2 abgebildeten Deckels und oberen Gehäuseabschnittes mit einem Behältnis.
Fig. 20 ist ein local vergrößerte schematische Betriebsansicht im Querschnitt, des in Fig. 2 dargestellten Deckels und oberen Gehäuseabschnittes, mit einem Behältnis auf dem Deckel.

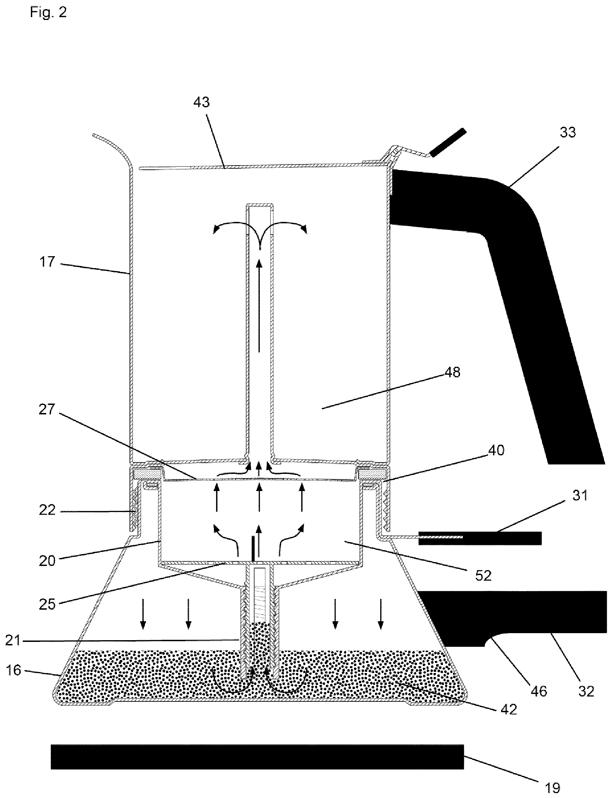

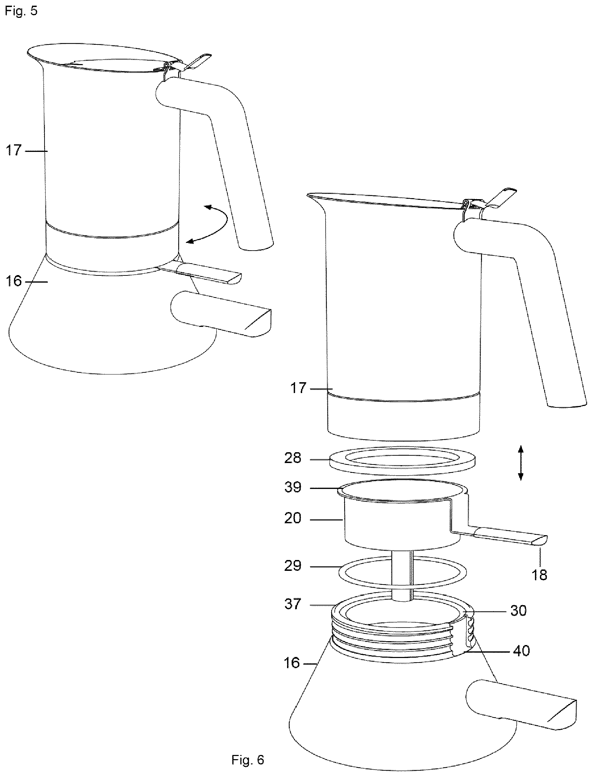

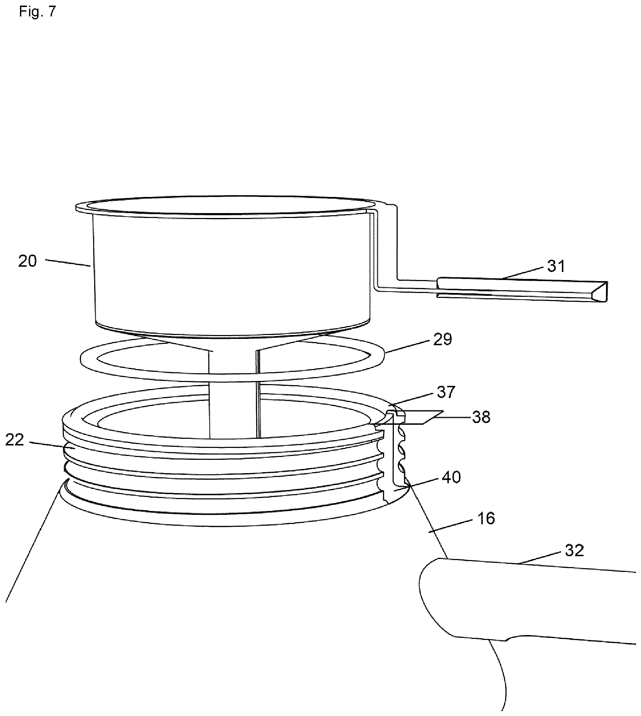

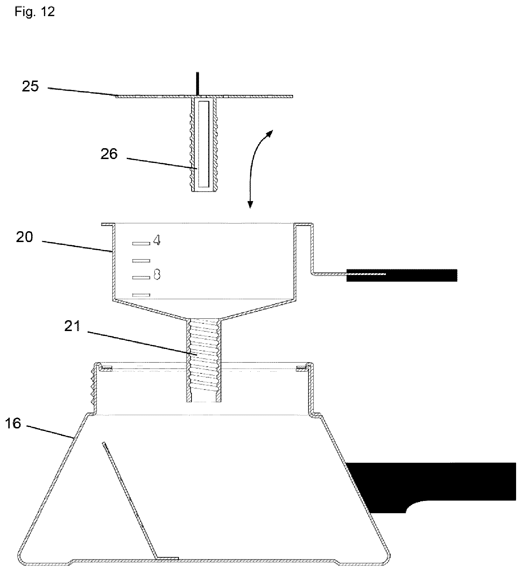

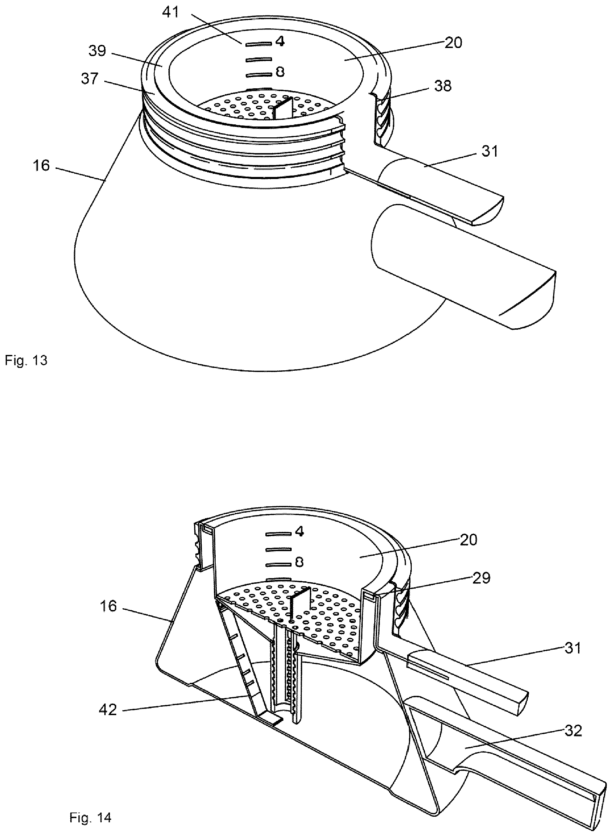

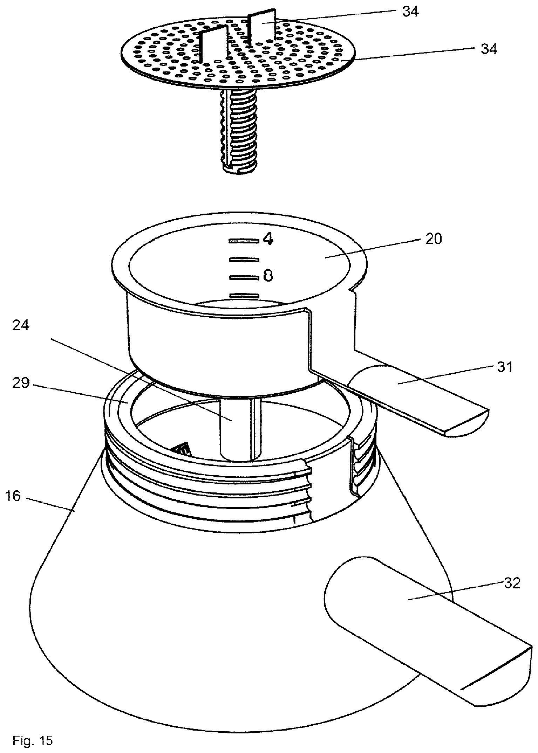

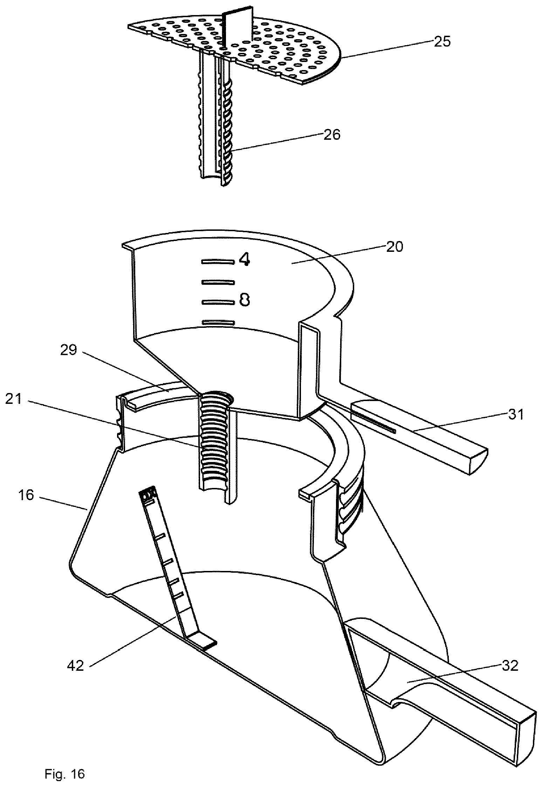

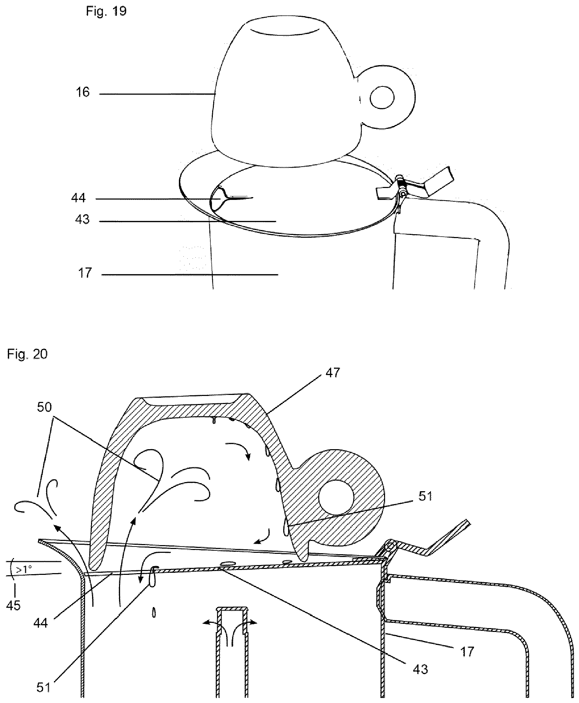

Im Folgenden wird auf die Zeichnungen Fig. 2 - 20 Bezug genommen.

Eine Vorrichtung nach dem Steigrohrprinzip für die Zubereitung eines Heißgetränks, insbesondere Kaffee und/oder Tee, gemäß der bevorzugten Ausführungsform der vorliegenden Erfindung umfasst demnach:
- einen unteren Gehäuseabschnitt (16) , der so ausgebildet ist, dass in diesen erhitzte Flüssigkeit zuleitbar und/oder in ihm befindliche Flüssigkeit (18) mittels einer externen Heizquelle (19) erhitzbar ist;
- einen oberen Gehäuseabschnitt (21) zum Abführen von durch den Einsatz (20) durchgeströmter Flüssigkeit aus dem unteren Gehäuseabschnitt (16);
- einen Einsatz (20) mit einem Steigrohr (24) zum Leiten der erhitzten Flüssigkeit (18) aus dem unteren Gehäuseabschnitt (16) in den oberen Gehäuseabschnitt (17) und zur Aufnahme des von erhitzten Flüssigkeit zu durchströmenden Kaffes oder Tee,
- wobei die Vorrichtung so ausgebildet ist, dass der untere Gehäuseabschnitt (16) mit dem oberen Gehäuseabschnitt (17) im kaltem als auch heißem Zustand druckdicht gegenüber der Umgebung abgeschlossen werden kann, sodass durch das Erhitzen von Flüssigkeit ein Überdruck im unteren Gehäuseabschnitt (16) herstellbar ist, durch den Flüssigkeit aus dem unteren Gehäuseabschnitt (16) zunächst durch den Einsatz (20) , dann durch das Durchflussvolumen (52) und schließlich durch einen Auslassbereich (48) drückbar ist
wobei am Einsatz (20) eine von außerhalb der Gehäuseabschnitte (16,17) erreichbare thermisch isolierte Griffmöglichkeit (31) vorgesehen ist, mit welcher der Einsatz (20) aus dem unteren Gehäuseabschnitt (16) entnommen werden kann.

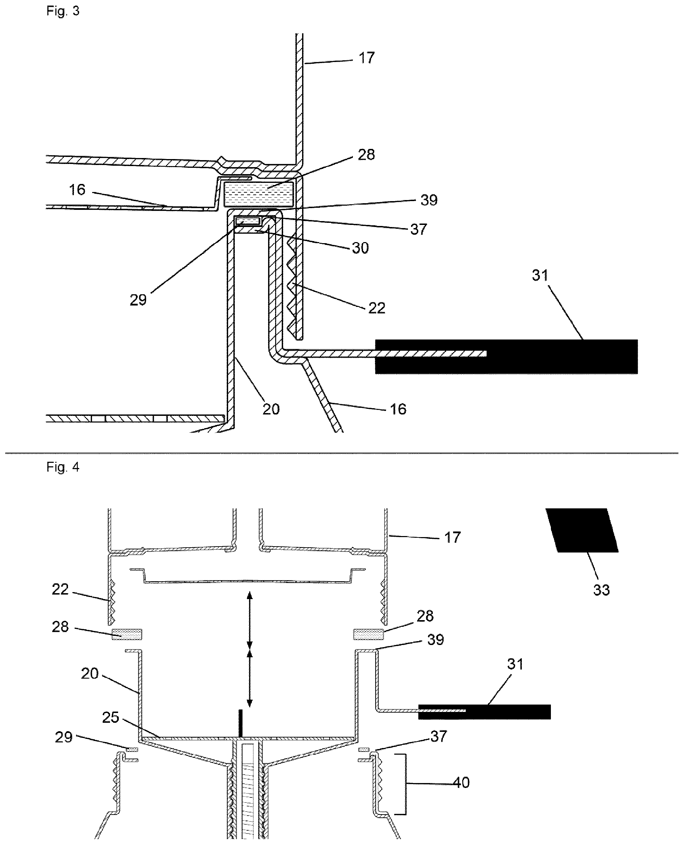

Der Einsatz (20) kann durch die Griffmöglichkeit (31) , im aufgeschraubtem Zustand (Fig. 4,6,7,12,15,16) der Gehäuseabschnitte (16,17), auch im heißen Zustand problemlos aus dem unteren Gehäuseabschnitt (16) entnommen werden und somit, auch leicht der Inhalt des Einsatzes (20) entleert oder neu befüllt werden.

Die thermisch isolierte Griffmöglichkeit (31) vom Einsatz (20), wird durch eine Führung (40), durch einen Gewindeverschluss (22) des unteren Gehäuseabschnittes (16) geführt. Diese Führung (40) ermöglicht , dass der Gewindeverschluss (22) trotz der thermisch isolierten Griffmöglichkeit (31) seine Funktion beibehält. Diese Führung (40) ist dabei mindestens so breit wie die herausführende Griffmöglichkeit (31) und so tief, dass die Griffmöglichkeit (31) den Gewindeverschluss (22) beim drehen nicht blockiert.

Eine Dichtmasse in Form eines Dichtungsringes (28) zwischen dem oberen Geäuseabschnitt (17) und dem unteren Gehäuseabschnitt (16) sorgt für eine druckdichte Verbindung der beiden Gehäuseabschnitte und hält dabei einen Auslassfilter (27) in Position.

Eine zweite Dichtungsmasse , in Form eines Dichtungsringes (29), ist so zwischen dem unteren Gehäuseabschnitt (16) und dem Einsatz (20) angeordnet, dass ein Überdruck im unteren Gehäuseabschnitt (16) herstellbar ist, ohne dass dabei Flüssigkeit oder Flüssigkeitsdampf zwischen dem unteren Gehäuseabschnitt (16) und dem Einsatz (20) entweichen kann.

Eine Aussparung (30) im unteren Gehäuseabschnitt (16) hält den Dichtungsring (29) dabei in Position zwischen dem unteren Gehäuseabschnitt (16) und dem Einsatz (20). Der Durchmesser der Aussparung (30), sowie des Dichtungsringes (29) dienen zusätzlich als Führung für den Einsatz (20), sodass dieser beim Einsetzen in den unteren Gehäuseabschnitt (16) in eine vorgegebene Position fällt. Die thermisch isolierte Griffmöglichkeit (31) gelangt durch die Aussparung (30) zu der Führung (40) durch den Gewindeverschluss (22). Dabei wird eine Auflagefläche (37) des unteren Gehäuseabschnittes (16) unterbrochen (Fig.3,4,7), welche für eine druckdichte Verbindung zwischen dem unteren Gehäuseabschnitt (16) und dem oberen Gehäuseabschnitt (17) benötigt wird, doch durch die zweite Dichtungsmasse (29) wird diese Druckdichte Verbindung wieder hergestellt.

Es gibt ein Konzept für eine Espressokanne, bei welchem ein Dichtungsring unterhalb des Einsatzes vorgeschlagen wird, jedoch wird der Grund hierfür nicht genau erläutert. Er scheint an Stelle des Dichtungsringes zwischen oberem und unteren Gehäuseabschnitt verwendet zu sein, würde die Funktion von diesem jedoch nicht ersetzen können und somit keine druckdichte Verbindung zwischen oberem und unterrem Gehäuseabschnitt schaffen. WO 2007/049307 A1 )

In der vorliegenden Erfindung ist ein zweiter Dichtungsring (29) unterhalb des Einsatzes (20) unabdingbar, da die Auflagefläche (37) für den oberen Dichtungsring (28) des unteren Gehäuseabschnittes (16) durch die Aussparung (30) für die Griffmöglichkeit (31) unterbrochen wird und somit eine druckdichte Verbindung vom unteren Gehäuseabschnitt (16) mit dem oberen Gehäuseabschnitt (17) nicht mehr möglich ist. Der zweite Dichtungsring (29) ermöglicht eine druckdichte Verbindung trotz einer oder mehrerer Unterbrechungen (38) der Auflagefläche (37) des unteren Gehäuseabschnittes (16). (Oberer Gehäuseabschnitt (17) presst auf oberen Dichtungsring (28), presst auf Einsatz (20) , presst auf unteren Dichtungsring (29), presst auf unteren Gehäuseabschnitt (16).

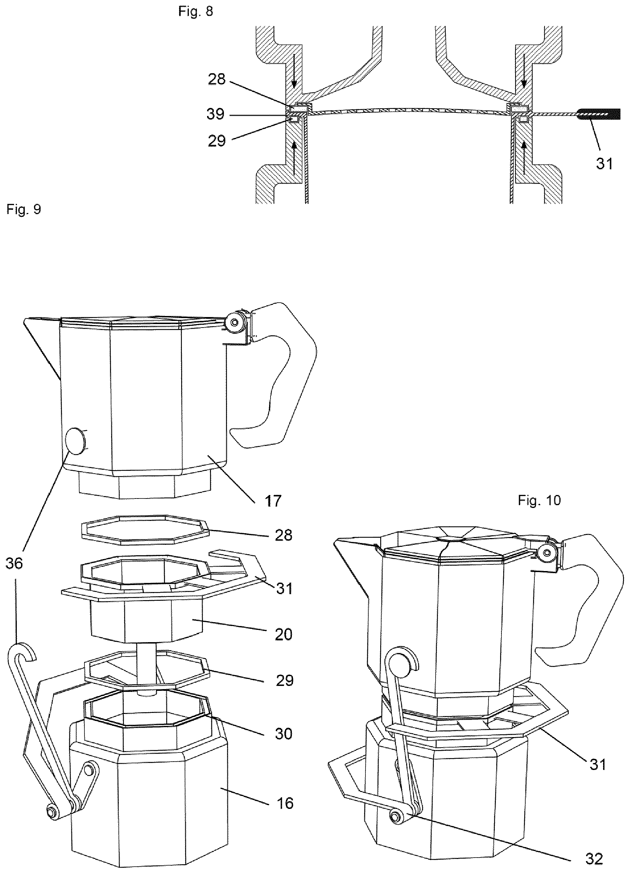

Ebenso ermöglicht ein zweiter Dichtungsring (29), dass die Auflagefläche (37) des unteren Gehäuseabschnittes (16) gesenkt und durch einen Kragen (39) des Einsatzes (20) ersetzt wird. Somit könnte der Kragen (39) zwischen einem oberen Dichtungsring (28) und einem unteren Dichtungsring (29) anliegen, welche von der Verbindung vom oberen Gehäuseabschnitt (17) und dem unteren Gehäuseabschnitt (16) aneinander gepresst werden könnten und so eine druckdichte Verbindung bilden könnten (Fig. 8,9,10, zeigen eine andere Bauweise auf, welche diese Verbindungsmöglichkeit betont.)

Auch nicht erfindungsgemässe Verschlussarten wie beispielsweise ein Bajonett- oder Steckverschlussverschluss sind möglich (siehe Fig.8,9,10).

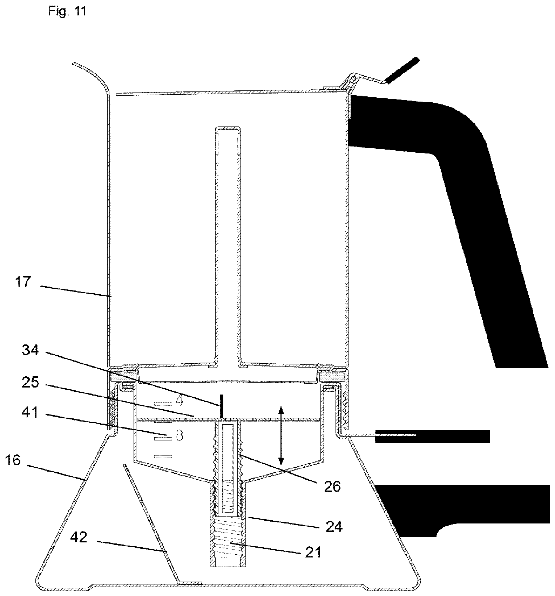

Das untere Steigrohr des Einsatzes (20) weist ein Gewinde (21) und einen mit dem Gewinde verschraubbaren Einlassfilter (25) auf, wobei der Einlassfilter (25) frei in der Höhe des Gewindes (21) eingestellt werden kann, bis hin zur vollständigen Entnahme des Einlassfilters (25) aus dem Einsatz (20) (siehe Fig.11,12,15,16),

Der Einlassfilter (25) ist mit einer Hohlschraube (26) und Griffmöglichkeiten (34) versehen, um den Einlassfilter (25) stufenlos und kontrolliert im Gewinde (21) des Einsatzes (20) rauf und runter schrauben zu können. Somit lässt sich der Einlassfilter (25) präzise in seiner Höhe verstellen und so die Menge an Kaffeepulver kontrolliert variieren.

Der Einlassfilter (25) fällt beim Entleeren des Einsatzes nicht heraus und kann sich zudem nicht im Einsatz (20) schräg stellen. Dabei blockiert er aufsteigende Flüssigkeiten (18) nicht (siehe Fig. 2).

Nach Stand der Technik gibt es ein Konzept, bei welchem sich ein Einlassfilter mittels einer Klammer, frei im Steigrohr eines Einsatzes positionieren lässt. Diese verhindert jedoch nicht mit Sicherheit ein Herausfallen des Einlassfilters aus dem Einsatz beim Entleeren, beziehungsweise Ausklopfen des Einsatzes. Ebenso verhindert eine Klammer nicht, dass sich ein Einlassfilter im Einsatz schräg stellt, sodass Kaffeepulver in das untere Steigrohr, sowie in den unteren Gehäuseabschnitt gelangen kann. Weiter ist die Höheneinstellung eines Einlassfilters durch eine Klammer deutlich unpräziser als durch ein Gewinde und kann beim Befüllen versehentlich weiter nach unten gedrückt werden.

Der Einlassfilter (25) kann weiter auch komplett aus dem Einsatz (20) entnommen werden um eine gründliche Reinigung zu erleichtern. (siehe Fig. 11,12,15,16)

Markierungen (41) an der Innenseite des Einsatzes (20) geben dabei Portionsgrößen entsprechend der möglichen Füllmenge an. Diese Portionsgrößen stehen im Verhältnis zur Menge an benötigtem Wasser. Die Wasserstandanzeige (42) im unteren Gehäuseabschnitt (16) (welche bereits von manchen Espressokannen verwendet wird,) kann durch weitere Markierungen (wie einer Skala) erweitert werden und hilft dabei, die Menge des Wassers, an die des Kaffeepulvers entsprechend anzupassen.

Eine 8 Tassen Kaffeekanne könnte somit 1-8 Tassen während eines Kochvorganges kochen. Zudem kann präzise das Verhältnis von Kaffee zu Wasser eingestellt werden und dem entsprechend auch die Intensität des entstehenden Kaffees stufenlos gewählt werden.

Der obere Gehäuseabschnitt (17) verfügt über eine thermisch isolierte Griffmöglichkeit (33).

Zudem verfügt der untere Gehäuseabschnitt (16) auch über eine thermisch isolierte Griffmöglichkeit (32) die permanent mit dem unteren Gehäuseabschnitt (16) verbunden sein kann oder auch nicht.

Die thermisch isolierte Griffmöglichkeit (32) am unteren Gehäuseabschnitt (16) ermöglicht in Kombination mit der thermisch isolierten Griffmöglichkeit (33) am oberen Gehäuseabschnitt (17), dass beide Gehäuseabschnitte (16,17) im heißen Zustand ohne weitere Hilfsmittel bedient werden können. Je nach Form der Griffmöglichkeiten (32,33), kann so eine erhöhte Hebelwirkung erzielt werden, welche den benötigten Kraftaufwand zum Öffnen und Schließen des Gewindeverschlusses (22) erheblich verringert. Die thermisch isolierte Griffmöglichkeit (32) ermöglicht zudem den unteren Gehäuseabschnitt (16) im heißen Zustand und ohne Hilfsmittel anzuheben, um diesen Beispielweise unter einen Wasserhahn zum erneuten Befüllen zu positionieren.

Diese Griffmöglichkeit (32) kann über geometrische Merkmale (46) verfügen, welche einen Benutzer haptisch führen (siehe Fig. 2) um eine optimale Griffposition einzunehmen und eine Verbrennungsgefahr weiter zu verringern.

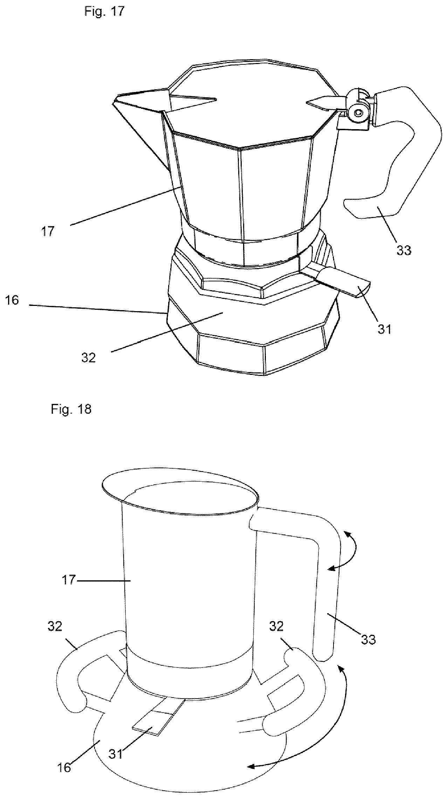

Es sind auch mehrere Griffmöglichkeiten (32) möglich, welche zudem miteinander verbunden sein können. (siehe Fig. 17,18)

Die thermische Isolation der Griffmöglichkeiten (31,32,33) wird bevorzugt durch Hohlgriffe, sowie Punktschweißen erreicht, kann aber auch durch nicht hitzeleitende Materialien, als auch spezielle Konstruktionsweisen erreicht werden.

Der obere Gehäuseabschnitt (17) verfügt über einen Deckel (43), der eine gerade Oberfläche aufweist, sodass auf diesem ein Behältnis (47) , wie eine handelsübliche Tasse oder Becher, kopfüber platziert werden kann.

Des weiteren verfügt dieser Deckel (43) über eine Öffnung (44) , beziehungsweise Formgebung, die es entstehendem Wasserdampf (50) ermöglicht in das Behältnis (47) zu strömen und dieses so zu erwärmen. Hierbei nimmt das Behältnis (47) gleichzeitig das Aroma und Gerüche des im Wasserdampf (50) gelöstem Kaffees auf.

Sich im Behältnis (47) bildendes Kondenswasser (51) fließt am Rand des Behältnisses (47) zurück auf den Deckel (43) welcher eine Abflussschräge/ beziehungsweise ein Gefälle (45) bildet, welche das Kondenswasser (51) zurück in den obere Gehäuseabschnitt (17) leiten.

Somit muss kein Wasser mehr verschwendet oder Aufsätze genutzt werden um Behältnisse wie Tassen vorzuwärmen. Dem Behältnis wird zusätzlich ein angenehmes Kaffee Aroma verliehen und das Behältnis kann während des Aufwärmprozesses einfach auf dem Deckel abgestellt werden und muss nicht aktiv bedient werden.

Die Erfindung wurde zwar anhand ihrer bevorzugten Ausführungsform(en) erläutert, doch es können viele weitere Änderungen und Variationen vorgenommen werden, ohne über den Umfang der vorliegenden Erfindung hinauszugehen.

## Patentansprüche

1. Vorrichtung nach dem Steigrohrprinzip für die Zubereitung eines Heißgetränks, insbesondere von Kaffee und/oder Tee, umfassend:
- einen unteren Gehäuseabschnitt (16) , der so ausgebildet ist, dass in diesen erhitzte Flüssigkeit zuleitbar und/oder in ihm befindliche Flüssigkeit (18) mittels einer externen Heizquelle (19) erhitzbar ist;
- einen oberen Gehäuseabschnitt (17) zum Abführen von durch den Einsatz (20) durchgeströmter Flüssigkeit (18) aus dem unteren Gehäuseabschnitt (16);
- einen Einsatz (20) mit einem Steigrohr (24) zum Leiten der erhitzten Flüssigkeit (18) aus dem unteren Gehäuseabschnitt (16) in den oberen Gehäuseabschnitt (17) und zur Aufnahme des von erhitzten Flüssigkeit zu durchströmenden Kaffes oder Tee,
- wobei die Vorrichtung so ausgebildet ist, dass der untere Gehäuseabschnitt (16) mit dem oberen Gehäuseabschnitt (17) im kaltem als auch heißem Zustand druckdicht gegenüber der Umgebung abgeschlossen werden kann, sodass durch das Erhitzen von Flüssigkeit ein Überdruck im unteren Gehäuseabschnitt (16) herstellbar ist, durch den Flüssigkeit aus dem unteren Gehäuseabschnitt (16) zunächst durch den Einsatz (20) , dann durch das Durchflussvolumen (52) und schließlich durch einen Auslassbereich (48) drückbar ist,
wobei am Einsatz außerhalb der Gehäuseabschnitte (16,17) eine thermisch isolierte Griffmöglichkeit (31) vorgesehen ist, mit welcher der Einsatz (20) aus dem unteren Gehäuseabschnitt (16) entnommen werden kann,
**dadurch gekennzeichnet, dass** die thermisch isolierte Griffmöglichkeit (31) vom Einsatz (20) durch eine oder mehrere Führungen (40) durch Gewindeverschlüsse (22) des unteren Gehäuseabschnittes (16) geführt ist.

2. Vorrichtung nach Anspruch 1, **dadurch gekennzeichnet, dass** eine Dichtungsmasse (29) so zwischen dem unteren Gehäuseabschnitt (16) und dem Einsatz (20) angeordnet ist, dass ein Überdruck im unteren Gehäuseabschnitt (16) herstellbar ist, ohne dass dabei Flüssigkeit oder Flüssigkeitsdampf zwischen dem unteren Gehäuseabschnitt (16) und dem Einsatz (20) entweichen kann.

3. Vorrichtung nach Anspruch 1, **dadurch gekennzeichnet, dass** das untere Steigrohr (24) des Einsatzes (20) ein Gewinde (21) und einen mit dem Gewinde (21) verschraubbaren Einlassfilter (25) aufweist, wobei der Einlassfilter (25) frei in der Höhe des Gewindes (21) eingestellt werden kann, bis hin zur vollständigen Entnahme des Einlassfilters (25) aus dem Einsatz (20),

4. Vorrichtung nach Anspruch 3, **dadurch gekennzeichnet, dass** der Einlassfilter (25) eine Hohlschraube (26) oder vergleichbares an seiner Unterseite besitzt, welche mit dem Gewinde (21) des Einsatzes (20) verschraubt, aufsteigende Flüssigkeiten (18) nicht blockiert.

5. Vorrichtung nach Anspruch 3, **dadurch gekennzeichnet, dass** der Einlassfilter (25) über mindestens eine Griffmöglichkeit (34) verfügt, welche ein Drehen des Einlassfilters (25) im Einsatz (20) ermöglicht.

6. Vorrichtung nach Anspruch 1, **dadurch gekennzeichnet, dass** der untere Gehäuseabschnitt (16) über eine thermisch isolierte Griffmöglichkeit (32) verfügt, die permanent mit dem unteren Gehäuseabschnitt verbunden sein kann oder auch nicht.

7. Vorrichtung nach den vorhergehenden Ansprüchen, **dadurch gekennzeichnet, dass** die thermische Isolation der Griffmöglichkeiten (31,32,33) sowohl durch nicht hitzeleitende Materialien, als auch spezielle Konstruktionsweisen wie Hohlgriffe, sowie Punktschweißen erreicht wird.

8. Vorrichtung nach Anspruch 1, **dadurch gekennzeichnet, dass** der obere Gehäuseabschnitt (17) über einen Deckel (43) verfügt, der so konstruiert ist, dass auf diesem ein Behältnis, wie eine handelsübliche Tasse oder Becher (47), kopfüber platziert werden kann, sodass dieses aufsteigenden Wasserdampf (50) auffangen kann, während entstehendes Kondenswasser zurück in den oberen Gehäuseabschnitt geleitet wird.

9. Vorrichtung nach Anspruch 8, **dadurch gekennzeichnet, dass** der Deckel (15) über ein oder mehrere Abflussschrägen beziehungsweise Gefälle >1° verfügt, beziehungsweise selbst ein Gefälle (45) bildet, welches zu den Rändern sowie eventuellen Öffnungen (44) des Deckels (43) hin abfällt.

10. Vorrichtung nach Anspruch 8, **dadurch gekennzeichnet, dass** die Fläche des Deckels (43) eine/mehrere Öffnungen (44) hat, durch welche Wasserdampf (50) aufsteigen kann.

## Claims

1. device according to the riser tube principle for the preparation of a hot beverage, in particular coffee and/or tea, comprising
- a lower housing section (16) which is designed such that heated liquid can be fed into it and/or liquid (18) located therein can be heated by means of an external heat source (19);
- an upper housing section (17) for discharging liquid (18) that has flowed through the insert (20) from the lower housing section (16);
- an insert (20) with a riser pipe (24) for guiding the heated liquid (18) from the lower housing section (16) into the upper housing section (17) and for receiving the coffee or tea to be flowed through by heated liquid (18),
- wherein the device is designed in such a way that the lower housing section (16) can be sealed with the upper housing section (17) in a pressure-tight manner towards the environment in both the cold and hot state, so that an excess pressure can be produced in the lower housing section (16) by the heating of liquid, by means of which excess pressure liquid can be forced out of the lower housing section (16) first through the insert (20), then through the flow volume (52) and finally through an outlet region (48).
- wherein a thermally insulated grip (31) is provided on the insert, which can be reached from outside the housing sections (16, 17) and with which the insert (20) can be removed from the lower housing section (16).
**characterised in that** the thermally insulated grip option (31) is guided from the insert (20) by one or more guides (40) through threaded closures (22) of the lower housing section (16).

2. Device according to claim 1, **characterised in that** a sealing compound (29) is arranged between the lower housing section (16) and the insert (20) in such a way that an overpressure can be produced in the lower housing section (16) without liquid or liquid vapour being able to escape between the lower housing section (16) and the insert (20).

3. Device according to claim 1, **characterised in that** the lower riser pipe (24) of the insert (20) has a thread (21) and an inlet filter (25) which can be screwed to the thread (21), wherein the inlet filter (25) can be freely adjusted in the height of the thread (21), up to the complete removal of the inlet filter (25) from the insert (20),

4. Device according to claim 3, **characterised in that** the inlet filter (25) has a hollow screw (26) or the like on its underside which, when screwed to the thread (21) of the insert (20), does not block rising liquids (18).

5. Device according to claim 4, **characterised in that** the inlet filter (25) has at least one handle (34) which enables the inlet filter (25) to be rotated in the insert (20).

6. Device according to claim 1, **characterised in that** the lower housing section (16) has a thermally insulated grip option (32), which may or may not be permanently connected to the lower housing section.

7. Device according to the preceding claims, **characterised in that** the thermal insulation of the handle options (31, 32, 33) is achieved both by non-heat-conducting materials and by special construction methods such as hollow handles and spot welding.

8. Device according to claim 1, **characterised in that** the upper housing section (17) has a lid (43) which is constructed in such a way that a container, such as a commercially available cup or mug (47), can be placed upside down on it, so that this can collect rising water vapour (50), while any condensation water which arises is directed back into the upper housing section.

9. Device according to claim 8, **characterised in that** the cover (15) has one or more drainage slopes or inclines >1°, or itself forms a slope (45) which falls towards the edges and any openings (44) of the cover (43).

10. Device according to claim 8, **characterised in that** the surface of the lid (43) has one or more openings (44) through which water vapour (50) can rise.

## Revendications

1. dispositif selon le principe de la colonne montante pour la préparation d'une boisson chaude, en particulier de café et/ou de thé, comprenant :
- une section de boîtier inférieure (16) qui est conçue de telle sorte que du liquide chauffé peut y être amené et/ou que le liquide (18) qui s'y trouve peut être chauffé au moyen d'une source de chaleur externe (19) ;
- une section de boîtier supérieure (17) pour évacuer de la section de boîtier inférieure (16) le liquide (18) qui s'écoule à travers l'insert (20) ;
- un insert (20) avec un tube de montée (24) pour conduire le liquide chauffé (18) de la section de boîtier inférieure (16) dans la section de boîtier supérieure (17) et pour recevoir du café ou du thé, qui peut être traversé par le liquide chauffé (18),
- le dispositif étant conçu de telle sorte que la partie inférieure du boîtier (16) puisse être fermée avec la partie supérieure du boîtier (17)de manière étanche, à l'état froid comme à l'état chaud, par rapport à l'environnement.
Ainsi le chauffage du liquide permettra de créer une surpression dans la partie inférieure du boîtier (16), grâce à laquelle le liquide peut être poussé hors de la partie inférieure du boîtier (16) d'abord à travers l'insert (20), puis à travers le volume d'écoulement (52) et enfin à travers une zone de sortie (48).
- une possibilité de préhension (31) isolée thermiquement et accessible de l'extérieur des sections de boîtier (16, 17) étant prévue sur l'insert, avec laquelle l'insert (20) peut être retiré de la section de boîtier inférieure (16).
- **caractérisé en ce que** la possibilité de préhension isolée thermiquement (31) est guidée de la section de boîtier inférieure (16) depuis l'insert (20) à travers un ou plusieurs guides (40) par des fermetures filetées (22).

2. Dispositif selon la revendication 1, **caractérisé en ce qu'**une masse d'étanchéité (29) est disposée entre la section de boîtier inférieure (16) et l'insert (20) de telle sorte qu'une surpression peut être établie dans la section de boîtier inférieure (16) sans que du liquide ou de la vapeur de liquide ne puisse s'échapper entre la section de boîtier inférieure (16) et l'insert (20).

3. Dispositif selon la revendication 1, **caractérisé en ce que** le tube ascendant inférieur (24) de l'insert (20) présente un filetage (21) et un filtre d'entrée (25) pouvant être vissé sur le filetage (21), le filtre d'entrée (25) pouvant être réglé librement en hauteur par rapport au filetage (21), jusqu'à même permettre l'enlèvement complet du filtre d'entrée (25) de l'insert (20),

4. Dispositif selon la revendication 3, **caractérisé en ce que** le filtre d'admission (25) possède une vis creuse (26) ou similaire sur sa face inférieure, qui, vissée avec le filetage (21) de l'insert (20), ne bloque pas les liquides ascendants (18).

5. Dispositif selon la revendication 4, **caractérisé en ce que** le filtre d'entrée (25) dispose d'au moins une possibilité de préhension (34) qui permet de faire tourner le filtre d'entrée (25) dans l'insert (20).

6. Dispositif selon la revendication 1, **caractérisé en ce que** la partie inférieure du boîtier (16) dispose d'une possibilité de préhension (32) isolée thermiquement, qui peut ou non être reliée de façon permanente à la partie inférieure du boîtier.

7. Dispositif selon les revendications précédentes, **caractérisé en ce que** l'isolation thermique des possibilités de préhension (31, 32, 33) est obtenue aussi bien par des matériaux non conducteurs de la chaleur que par des modes de construction spéciaux tels que des poignées creuses, ainsi que le soudage par points.

8. Dispositif selon la revendication 1, **caractérisé en ce que** la partie supérieure du boîtier (17) dispose d'un couvercle (43) construit de telle sorte qu'un récipient, tel qu'une tasse ou un gobelet (47) disponible dans le commerce, peut être placé à l'envers sur celui-ci, afin qu'il puisse recueillir la vapeur d'eau montante (50), tandis que le liquide de condensation qui se forme est reconduite dans la partie supérieure du boîtier.

9. Dispositif selon la revendication 8, **caractérisé en ce que** le couvercle (15) dispose d'une ou de plusieurs pentes d'écoulement ou de pentes à >1°, voire formant lui-même une pente (45) qui descend vers les bords ainsi que vers d'éventuelles ouvertures (44) du couvercle (43).

10. Dispositif selon la revendication 8, **caractérisé en ce que** la surface du couvercle (43) présente une/plusieurs ouvertures (44) à travers lesquelles la vapeur d'eau (50) peut évacuer.
